# EUROPEAN PATENT SPECIFICATION

(11) **EP 1 128 913 B1**
(45) Date of publication and mention of the grant of the patent: **08.06.2005**
(21) Application number: 99953960.4
(22) Date of filing: 02.11.1999
(51) Int. Cl.: B07B 1/46, B01D 29/07, B01D 29/01, B01D 29/52, B01D 29/72, B01D 33/00, B01D 33/03, B01D 33/01

(54) **A SCREEN FOR USE IN A SHALE SHAKER**
SIEBBODEN FÜR SCHIEFER-SCHÜTTELVORRICHTUNG
CRIBLE POUR TAMIS VIBRANT

(30) Priority: 30.10.1998 US 183003
(43) Date of publication of application: 05.09.2001
(73) Proprietor: Varco I/P, Inc., Houston, TX 77051 (US)
(72) Inventor: LARGENT, David Wayne, Cleveland, TX 77327 (US); SEYFFERT, Kenneth, Wayne, Houston, TX 77018 (US); ADAMS, Thomas Cole, Hockley, TX 77447 (US); SCHULTE, David, Lee, Broussard, LA 70518 (US); MCCLUNG, Guy, Lamont, Spring, TX 77379 (US)
(74) Representative: Lucas, Brian Ronald
(86) International application number: PCT/EP1999/008348
(87) International publication number: WO 2000/025942

(56) References cited:
- DE-A- 2 108 854
- US-A- 5 211 291
- US-A- 5 819 951

## Description

The present invention relates to a screen for use in a shale shaker and a method for using same.

Shale shakers have been used for many years to separate particles in a wide array of industrial applications. One common application for shale shakers is in drilling operations to separate particles suspended in drilling mud. If drilled solids are not removed from the mud used during the drilling operation, re-circulation of the drilled solids can create weight, viscosity, and gel problems in the mud, as well as increasing wear on mud pumps and other mechanical equipment used for drilling.

A shale shaker generally includes at least one screen which is generally flat and mounted generally horizontally on a vibrating mechanism or shaker that imparts either a rapidly reciprocating linear, elliptical or circular motion to the screen. A shale shaker may comprise a series of screens arranged in tiered or flat disposition with respect to each other. In use, the vibrating mechanism vibrates the screen. Circulated drilling mud is poured on to a back end of the vibrating screen, usually from a pan mounted above the screen. The material generally flows toward the front end of the screen. Large particles are unable to pass through the screen, remaining on top of the screen and moving toward the front of the screen where they are collected. The smaller particles and fluid flows through the screen and collects in a pan beneath the screen.

A screen may have a fine screen cloth. The screen may have two or more overlying layers of screen cloth. The layers may be bonded together and be provided with a support, supports, or a perforated or apertured plate beneath the screen or screens. The frame of the vibrating screen is resiliently suspended or mounted upon a support and is caused to vibrate by a vibrating mechanism, for example an unbalanced weight on a rotating shaft connected to the frame. Each screen may be vibrated by vibratory equipment to create a flow of trapped solids on top surfaces of the screen for removal and disposal of solids. The fineness or coarseness of the mesh of a screen may vary depending upon mud flow rate and the size of the solids to be removed.

Many screens used with shale shakers are flat or nearly flat which are known as two-dimensional screens. Other screens having corrugated, depressed, or raised surfaces are three-dimensional. US-A-5,417,793, US-A-5,417,858 and US-A-5,417,859 disclose non-flat screens for use with shale shakers. These screens have a lower planar apertured plate with a multiplicity of spaced-apart apertures or openings therethrough. Undersides of troughs of undulating screening material are bonded to the apertured plate. Such screens present a variety of problems, deficiencies, and disadvantages, including: decreased flow area due to area occluded by solid parts of the apertured plate; necessity to either purchase relatively expensive apertured plate or provide for in-house perforating of a solid plate; plate weight increases wear on parts such as rubber screen supports or cushions and can inhibit required vibration; large plate surface area requires relatively large amount of bonding means for bonding screens to the plate; and a finished screen which is relatively heavy increases handling problems, hazards, and cost of shipping.

US-A-5 819 951 discloses a separator plate comprising non-perforated transversal ribs at an upstream side thereof. The non-perforated transversal ribs serve to stratify material before it reaches the screening portion of the separator plate.

According to the present invention there is provided a screen for a shale shaker, said screen comprising at least one layer of screening material and at least one ramp characterised in that said ramp is formed of screening material. The screening material permits the flow of material therethrough.

Advantageously, said screen further comprises a base on which said screening material is arranged thereon.

Preferably, the base comprises a perforated plate.

Advantageously, the base comprises a frame with pairs of opposed side members, a first pair of side members interconnected between a second pair of side members.

Preferably, the at least one strap interconnected between one of the pairs of side members. Or may be straps.

Advantageously, the at least one strap underlies the at least one layer of screening material and is positioned in front of a leading edge of the at least one ramp.

Preferably, the at least one strap is a plurality of spaced-apart straps, the at least one ramp is a plurality of spaced-apart ramps, and for each ramp a strap is positioned in front of a leading edge of each ramp.

Advantageously, the at least one layer of screening material comprises a plurality of layers of screening material.

Preferably, the plurality of layers of screening material are adhered together. The layers may be adhered together by, for example welding, bonding, gluing, fusing, and/or sintered partly or substantially over the entire mesh surface.

Advantageously, the at least one ramp comprises a plurality of spaced-apart ramps.

Preferably, the ramps are spaced-apart between about 7.6cm to about 12.7cm (three to about five inches).

Advantageously, the at least one ramp has a width between about 7.6cm to about 12.7cm (three to about five inches) and a height between about 0.64cm to about 3.81cm (one-fourth to about one and a half inches).

Preferably, the at least one ramp has a ramped surface at an angle between about twenty degrees to about forty degrees from horizontal. The ramp may form a triangle which may be have obtuse, acute or right angles.

Advantageously, the at least one ramp has a rear face at an angle of between about eighty degrees to about one hundred twenty five degrees to the horizontal.

Preferably, the at least one ramp has a shape when viewed on end from the group consisting of triangular, semi-circular, and rectangular.

Advantageously, the at least one ramp comprises two ramp portions aligned end-to-end and with adjacent ends spaced apart by a flow path therebetween for material being processed by the vibratory shaker.

Preferably, the screen further comprises a plurality of spaced-apart straps, the at least one layer of screening material on the plurality of spaced apart straps.

Advantageously, the plurality of spaced-apart straps are connected to a lower surface of the at least one layer of screening material.

Preferably, the screen is generally flat and comprises said at least one ramp. Preferably, the flat portion extends across the entire width of the screen.

Advantageously, the screen comprises at least two ramps defining a dewatering area.

Preferably, the ramp extends across approximately 80% of the width of the screen.

The present invention also provides a shale shaker comprising a screen according to the invention.

The present invention also provides a method for using the shale shaker according to the invention, the method comprising the steps of vibrating said screen and screening a particle laden fluid through said screen.

For a better understanding of the present invention, reference will now be made, by way of example, to the accompanying drawings, in which:
Figure 1A is a perspective view of a first embodiment of a screen in accordance with the present invention;
Figure 1B is a bottom plan view of a second embodiment of a screen in accordance with the present invention;
Figure 1C is a top plan view of a third embodiment of a screen in accordance with the present invention;
Figure 1D is a side plan view of a fourth embodiment of a screen in accordance with the present invention, with hidden parts shown in dashed lines;
Figure 1E is a side plan view of a fifth embodiment of a screen in accordance with the present invention, with hidden parts shown in dashed lines;
Figure 1F is an end plan view of the screen of Figure 1A;
Figures 2A - 2E are cross-sectional views of alternative screen ramp profiles in accordance with the present invention;
Figures 3 - 5 are top plan views of further screens in accordance with the present invention;
Figure 6A and 6B are cross-sectional views of part of further screens in accordance with the present invention;
Figures 7A and 7B are cross-sectional views of part of further screens in accordance with the present invention;
Figure 8 is a side view of a further screen in accordance with the present invention, with hidden parts shown in dashed lines;
Figure 9A is a top plan view of a further screen in accordance with the present invention;
Figure 9B is a cross-section view along line 9B-9B of Figure 9A; and
Figure 10 is a perspective view of a shale shaker in accordance with the present invention.

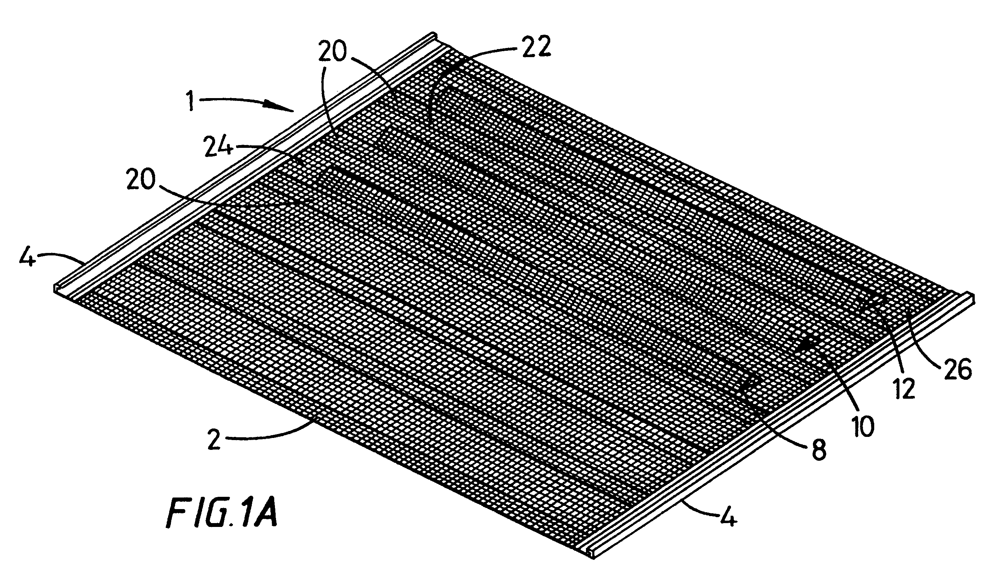

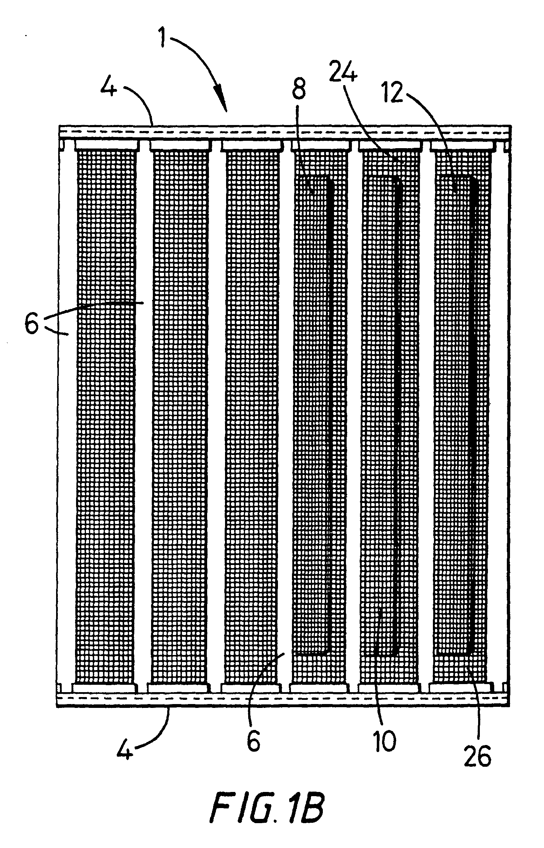

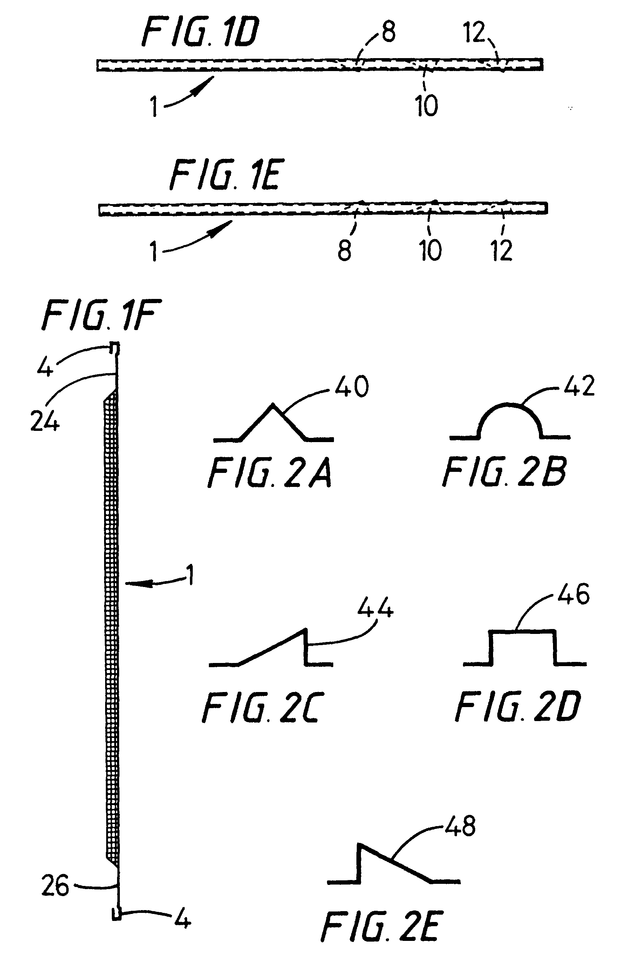

Figure 1A to 1F each show a screen 1 in accordance with the present invention with mesh 2 supported on spaced-apart straps 6. The mesh 2 may be any suitable known mesh, screen, meshes, screens, or combination thereof, secured together or lying on each other and/or partially bonded or sintered together, or so connected to each other over substantially all of their area. In the screen 1, the mesh 2 is, in one aspect, a wire mesh that is bonded to the straps 6.

The straps 6 are secured to hookstrips 4, which for example may be those disclosed in PCT Publication No. WO 97/28906.

As shown in Figure 1A, the screen 1 has three spaced-apart ramps 8, 10, 12. A dewatering area or pool 22 is defined between the two ramps 8, 10 and a dewatering area or pool 20 is defined between the two ramps 10, 12. Side flow paths 24, 26 are positioned between ends of the ramps 8, 10, 12 and the hookstrips 4.

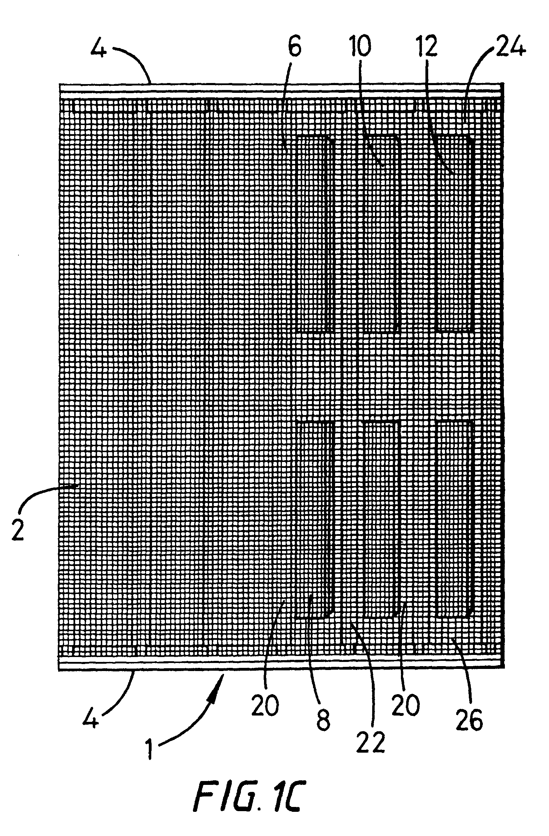

In one aspect the ramp 8 is located so that fluid material is introduced onto the screen 1 in an area behind (to the left in Figure 1C) the ramp 8 and which includes one of the straps 6 therebeneath to counter effects of the impact of the fluid material on the wire mesh 2 in this area. Also such a location of the ramp 8 with respect to the strap 6 facilitates dewatering of solids in this area while inhibiting screen wear. Liquid rising to the top can exit through the screen ramp. Similarly a strap 6 traverses the areas 22 and 26.

Alternatively, the ramp portions and straps may be positioned so that any or part of the ramp portions overlie a strap or a portion of a strap. The ramp portions may be spaced apart any desired distance. In one aspect the screen 1 is about 91cm by 115cm (36 inches by 45½ inches); the right-hand edge (as viewed in Figure 1C) of the ramp 8 is between about 7.6cm to 12.7cm (three to about five inches) or more from the left-hand edge of the ramp 10; the right-hand edge of the ramp 10 is between about 7.6cm to 12.7cm (three to about five inches) or more from the left-hand edge of the ramp 12; the right-hand edge of the ramp 12 is between about 7.6cm to 12.7cm (three to about five inches) or more from the right edge of the screen 1; and the ramps are between about 7.6cm to 12.7cm (three to about five inches) wide (horizontal dimension as viewed in Figure 1E) and about 1.25cm (½ inch) high (as in Figure 1E). Each ramp 8, 10, 12 has a ramped surface 8a, 10a, 12a, respectively at an angle, preferably, between about twenty to about forty degrees from the horizontal, more preferably between about twenty-five to about thirty degrees, and in one particular aspect about twenty seven- degrees. Each ramp also has a rear face at between about eighty to about one hundred twenty-five degrees to the horizontal, more preferably between ninety and one hundred twenty degrees, and in one particular aspect about one hundred fifteen degrees.

Figs. 2A - 2E show cross-section views for a variety of ramp profiles 40 - 48 according to the present invention. In certain preferred embodiments ramp heights range between 0.6cm (¼ inch) and 3.8cm (1½ inches) and ramp widths range between about 2.5cm and 12.7cm (one inch and about five inches).

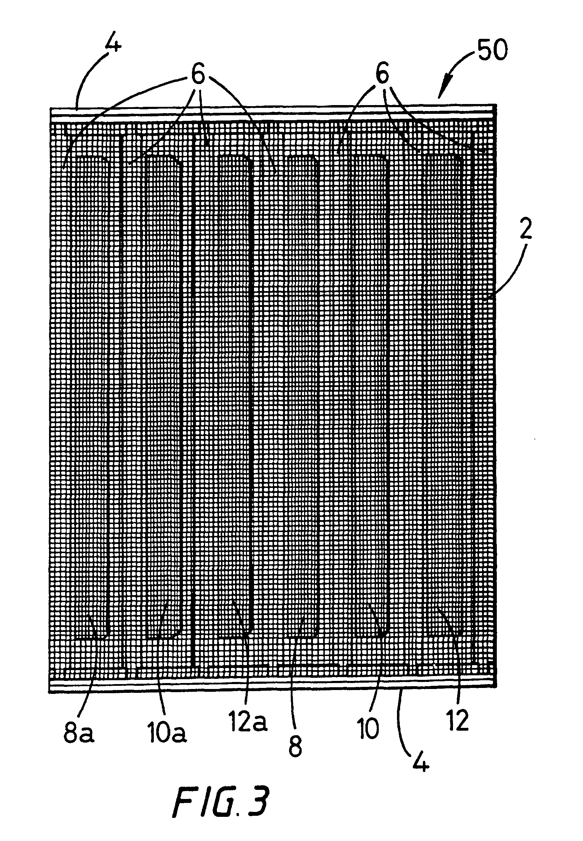

It is within the scope of this invention to provide a screen with one, two, three, four, five, six or more ramps and the ramps may be the same or different on a multi-ramp screen - and may be any ramp with any profile disclosed herein. Figure 3 shows a screen 50 like the screen 1 (and like numerals indicate the same parts), but with an additional series of ramps 8a, 10a, 12a.

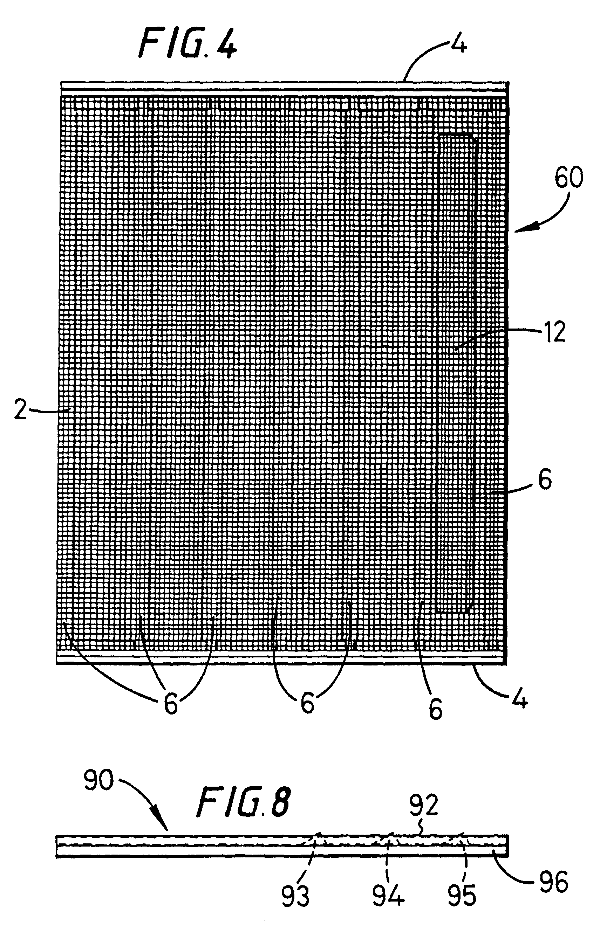

Figure 4 shows a screen 60 like the screen 1 (and like numerals indicate the same parts), but with only one ramp 12.

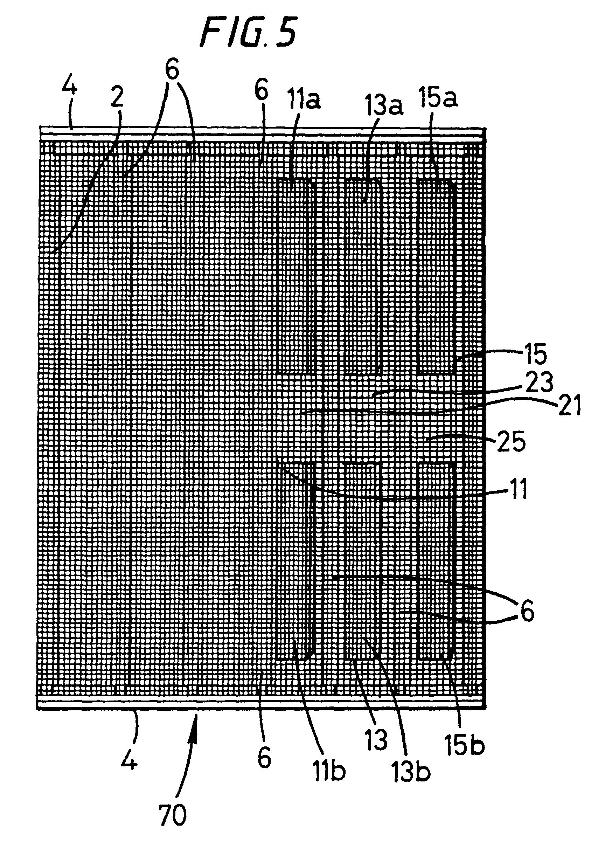

Figure 5 shows a screen 70 like the screen 1 (and like numerals indicate the same parts), but with divided ramps 11, 13, 15 (each with ramp portions 11a, 11b; 13a, 13b; 15a, 15b, respectively) each having a flow path 21, 23, 25 between ramp portions. It is within the scope of this invention to provide: a full undivided ramp for any of the ramps 11, 13 or 15; a flow path between ramp portions of any desired width, including, but not limited to, between about 7.6cm (three inches) and about 12.7cm (five inches); and to provide additional flow paths (one, two, or more) through the ramp portions themselves. In one aspect, ramp portions are offset to provide a more tortuous path for wet solids. Any one or two of the paths 21, 23, 25 may be deleted by providing an undivided ramp across the screen 70.

In any screen disclosed herein with one, two or three ramps on one side of the screen (as viewed from above), e.g. as in Figs. 1D, 27 and 28, it is within the scope of this invention to provide one, two or more ramps on the other side of the screen.

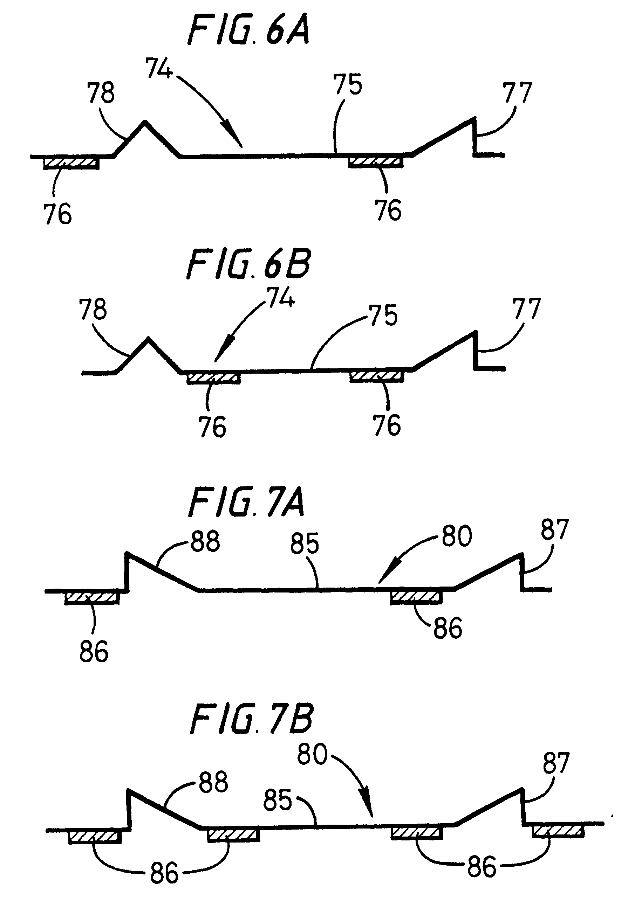

Different ramp profiles may be used on the same screen. Figure 6A shows part of a screen 74 according to the present invention (like the screen 1) with mesh 75 and spaced-apart ramps 77, 78. Straps 76 (like the straps 6) are beneath the mesh 75. Figure 6B shows a different location for the straps 76.

Figure 7A shows a screen 80 according to the present invention (like the screen 1) with mesh 85 in straps 86 (like the straps 6) and ramps 87, 88. Figure 7B shows the screen 80 with additional straps 86. The screens of Figs. 6A - 6B may have hookstrips and straps like the screens 1, 50, 60 and/or 70.

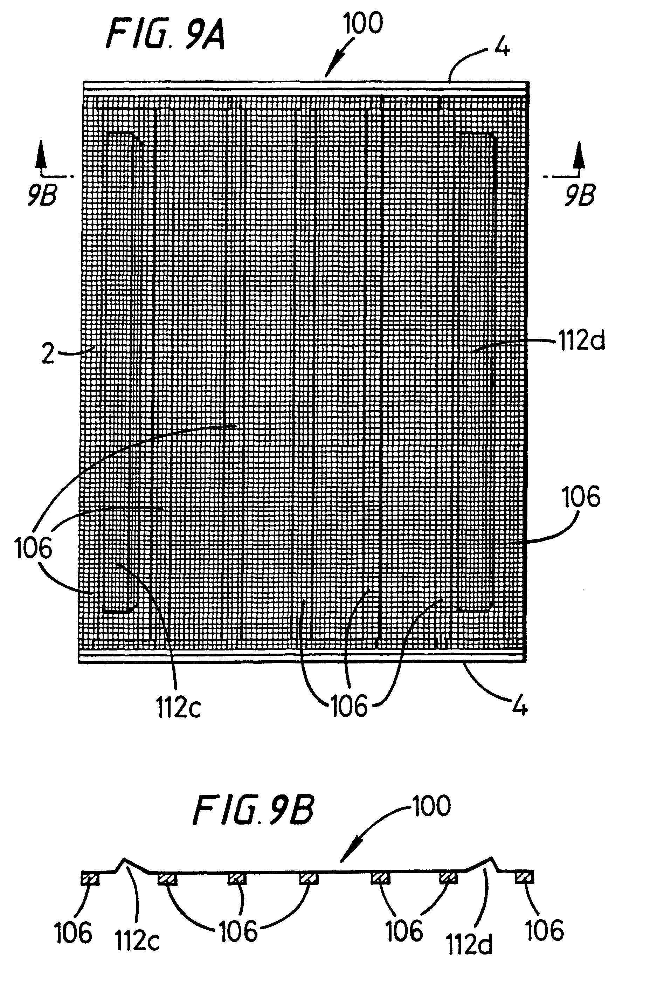

Although a series of spaced-apart parallel straps is not the legal equivalent of a perforated plate, a screen as described herein (Figs. 1D - 7B) and/or any ramp or ramp portion as described herein may be used on a perforated plate and, in particular aspects, on a perforated plate of any prior art screen instead of the prior art mesh(es) and/or screen(s) used thereon, including, but not limited to, with flat and/or three-dimensional screens and/or with the plates of the screens of previous U.S. Patents 4,575,421; 5,720,881; 5,417,858; 5,783,077; 5,417,859; 5,417,793; 5,636,749; 4,033,865; 5,221,008; 4,819,809; 4,065,382; 3,929,642; and 5,211,291. Such a screen is illustrated by the screen 90 of Figure 8 which has mesh 92; ramps 93, 94, 95; and a perforated plate 96 (side view shown without showing perforations that do extend through the plate). It is also within the scope of this invention to use a perforated plate under a portion of the screen mesh and one or more straps under the remaining portions of the screen mesh, with one or more ramped screen portions over the perforated plate and/or over the strap(s).

Figs. 9A and 9B show a screen 100 like the screen 60 (like numerals indicate the same parts) but with an additional ramp 12c at the side of the screen opposite the side with the ramp 12d. Such a ramp 12c may be used with the screens 1 or 70. Flow paths may be used through the ramp 12c and/or through the ramp 12d. The ramps 12c and 12d are separate pieces that are bonded to, sintered to, and/or secured to the mesh 2 and/or to a strap 6, e.g. by any structure or securement apparatus or method disclosed herein (e.g., but not limited to as in Figs. 1A, 3D, 9 - 17E). Any ramp or ramp portion herein may also be so connected to a mesh, screen, plate, and/or strap and/or secured to the mesh (screen, strap, and/or plate), e.g. by any structure or securement.

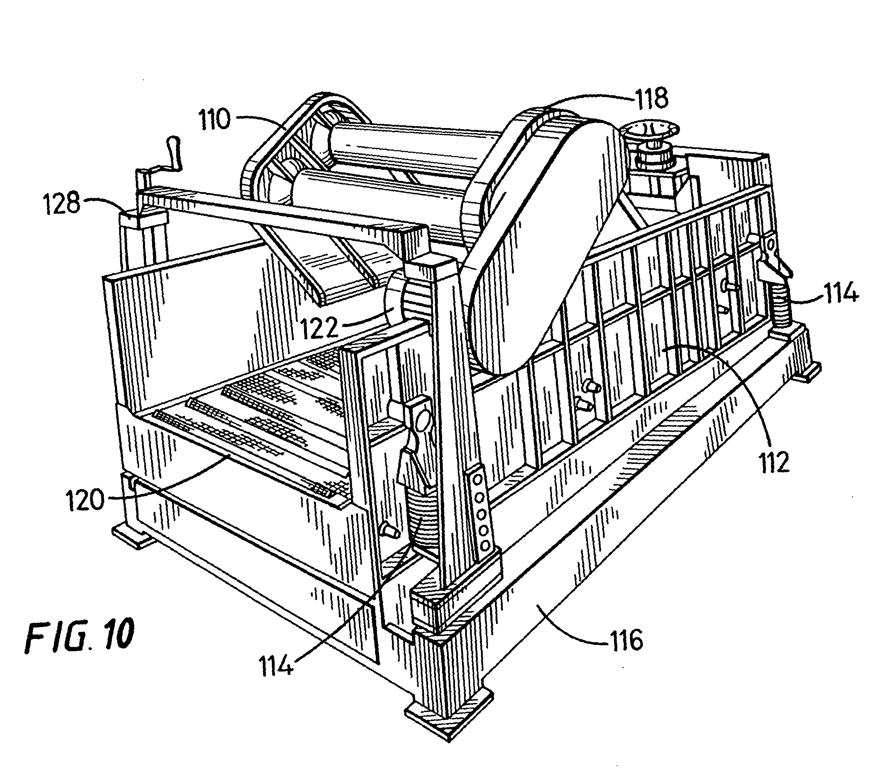

Referring now to Figure 10, a vibratory separator system 110 according to the present invention has a screen 120 (with screen or screening cloth or mesh as desired) according to the present invention mounted on vibratable screen mounting apparatus or "basket" 112. The screen 120 may be any screen disclosed herein or have any combination of any feature or features of any screen or screen part disclosed herein; and any such screen may be used with any appropriate shaker or screening apparatus. The basket 112 is mounted on springs 114 (only two shown; two as shown are on the opposite side) which are supported from a frame 116. The basket 112 is vibrated by a motor 122 and interconnected vibrating apparatus 118 which is mounted on the basket 112 for vibrating the basket and the screens. Elevator apparatus 128 provides for raising and lowering of the basket end. The screen 120 may be any screen disclosed herein, including, but not limited, those of Figs. 1D - 9A. As shown the screen 120 is like the screen 1 of Figure 1D. In certain aspects using a ramped screen as in Figure 1A produces processed cuttings with an oil content of 3% or less and a water content of 20% or less when the screen is used in a multi-screen BRANDT LCM2D shaker beneath two standard DX 210 screens; and in a particular embodiment of such a screen, the oil content is less than 2% with a water content less than 15%. Any ramp disclosed herein may have a curved or undulating shape as viewed from above instead of the straight shape, e.g. as disclosed in Figure 3. One or more ramps and/or divided ramps as described above may be used on any screen disclosed herein having one or more screens formed with an undulating shape.

A ramp may comprise a rising portion, a flat portion and a falling portion. This ramp may be arranged on a substantially flat screen and may rise parallel with the substantially flat screen and fall back to the substantially flat screen.

It should be noted that there is a flat portion arranged between each raised portion. Preferably, the flat portion overlies the supporting struts.

Advantageously, the distance between successive raised portions is approximately equal to the distance across said raised portion.

Preferably, the flat portions extend across the entire width of the screen.

Advantageously, the ramp portion extends across approximately 80% of the width of the screen.

## Claims

1. A screen for a shale shaker, said screen (1) comprising at least one layer of screening material (2) and at least one ramp (8) **characterised in that** said ramp is formed of screening material.

2. A screen as claimed in Claim 1, further comprising a base on which said screening material is arranged.

3. A screen as claimed in Claim 2, wherein the base comprises a perforated plate (96).

4. A screen as claimed in Claim 2 or 3, wherein the base comprises a frame with pairs of opposed side members, a first pair of side members interconnected between a second pair of side members.

5. A screen as claimed in Claim 4, further comprising at least one strap (6) interconnected between one of the pairs of side members.

6. A screen as claimed in Claim 5, wherein said at least one strap (6) underlies the at least one layer of screening material (2) and is positioned in front of a leading edge of the at least one ramp (8).

7. A screen as claimed in Claim 5 or 6, wherein said at least one strap (6) is a plurality of spaced-apart straps, the at least one ramp (8) is a plurality of spaced-apart ramps (8, 10, 12), and for each ramp a strap is positioned in front of a leading edge of each ramp.

8. A screen as claimed in any preceding claim, wherein said at least one layer of screening material (2) comprises a plurality of layers of screening material.

9. A screen as claimed in Claim 8, wherein said plurality of layers of screening material are adhered together.

10. A screen as claimed in any preceding claim, wherein said at least one ramp (8) comprises a plurality of spaced-apart ramps (8, 10, 12).

11. A screen as claimed in Claim 10, wherein said ramps (8, 10, 12) are spaced-apart between about 7.6cm to about 12.7cm (three to about five inches).

12. A screen as claimed in any preceding claim, wherein the at least one ramp (8) has a width between about 7.6cm to about 12.7cm (three to about five inches) and a height between about 0.64cm to about 3.81cm (one-fourth to about one and a half inches).

13. A screen as claimed in any preceding claim, wherein the at least one ramp (8) has a ramped surface at an angle between about twenty degrees to about forty degrees from horizontal.

14. A screen as claimed in any preceding claim, wherein the at least one ramp (8) has a rear face at an angle of between about eighty degrees to about one hundred twenty five degrees to the horizontal.

15. A screen as claimed in any preceding claim, wherein the at least one ramp (8) has a shape when viewed on end from the group consisting of triangular, semi-circular, and rectangular.

16. A screen as claimed in any preceding claim, wherein the at least one ramp (8) comprises two ramp portions aligned end-to-end and with adjacent ends spaced apart by a flow path therebetween for material being processed by the vibratory shaker.

17. A screen assembly as claimed in any preceding claim, further comprising a plurality of spaced-apart straps (6), the at least one layer of screening material (2) on the plurality of spaced apart straps (6).

18. A screen as claimed in Claim 15, wherein the plurality of spaced-apart straps (6) are connected to a lower surface of the at least one layer of screening material (2).

19. A screen as claimed in any preceding claim, wherein said screen is generally flat and comprises said at least one ramp (8).

20. A screen as claimed in any Claim 19, wherein the flat portion extends across the entire width of the screen.

21. A screen as claimed in any preceding claim, wherein the screen comprises at least two ramps defining a dewatering area.

22. A screen as claimed in any preceding claim, wherein the ramp extends across approximately 80% of the width of the screen.

23. A shale shaker (110) comprising a screen as claimed in any preceding claim.

24. A method for using the shale shaker (110) as claimed in Claim 23, said method comprising the steps of vibrating said screen and screening a particle laden fluid through said screen.

## Patentansprüche

1. Siebboden für ein Schlammschüttelsieb, wobei der Siebboden (1) mindestens eine Schicht aus einem Siebmaterial (2) und mindestens eine geneigte Fläche (8) umfaßt, **dadurch gekennzeichnet, daß** die geneigte Fläche aus Siebmaterial gebildet ist.

2. Siebboden nach Anspruch 1, der ferner ein Grundteil aufweist, auf dem das Siebmaterial angeordnet ist.

3. Siebboden nach Anspruch 2, wobei das Grundteil eine perforierte Platte (96) umfaßt.

4. Siebboden nach Anspruch 2 oder 3, wobei das Grundteil einen Rahmen mit Paaren entgegengesetzter Seitenteile umfaßt, wobei ein erstes Paar Seitenteile zwischen einem zweiten Paar Seitenteile eingebunden ist.

5. Siebboden nach Anspruch 4, der ferner mindestens ein Band (6) umfaßt, das zwischen einem der Paare der Seitenteile eingebunden ist.

6. Sieb nach Anspruch 5, wobei das zumindest eine Band (6) unter der zumindest einen Schicht aus Siebmaterial (2) liegt und sich vor der Vorderkante der zumindest einen geneigten Fläche (8) befindet.

7. Siebboden nach Anspruch 5 oder 6, wobei das zumindest eine Band (6) eine Mehrzahl von räumlich getrennten Bändern ist, die zumindest eine geneigte Fläche (8) eine Mehrzahl von räumlich getrennten geneigten Flächen (8, 10, 12) ist und sich für jede geneigte Fläche ein Band vor der Vorderkante jeder geneigten Fläche befindet.

8. Siebboden nach einem der vorstehenden Ansprüche, wobei die zumindest eine Schicht aus Siebmaterial (2) eine Mehrzahl von Schichten aus Siebmaterial umfaßt.

9. Siebboden nach Anspruch 8, wobei die Mehrzahl der Schichten aus Siebmaterial aneinander haftet.

10. Siebboden nach einem der vorstehenden Ansprüche, wobei die zumindest eine geneigte Fläche (8) eine Mehrzahl von räumlich getrennten geneigten Flächen (8, 10, 12) aufweist.

11. Siebboden nach Anspruch 10, wobei die geneigten Flächen (8, 10, 12) etwa 7,6 bis etwa 12,7 cm (3 bis etwa 5 inch) räumlich voneinander getrennt sind.

12. Siebboden nach einem der vorstehenden Ansprüche, wobei die zumindest eine geneigte Fläche (8) eine Breite von etwa 7,6 bis etwa 12,7 cm (3 bis etwa 5 inch) und eine Höhe von etwa 0,64 bis etwa 3,81 cm (0,25 bis etwa 1,5 inch) aufweist.

13. Siebboden nach einem der vorstehenden Ansprüche, wobei die zumindest eine geneigte Fläche (8) eine in einem Winkel von etwa 20° bis etwa 40° zur Waagerechten geneigte Oberfläche aufweist.

14. Siebboden nach einem der vorstehenden Ansprüche, wobei die zumindest eine geneigte Fläche (8) eine Rückseite in einem Winkel von etwa 80° bis etwa 125° zur Waagerechten aufweist.

15. Siebboden nach einem der vorstehenden Ansprüche, wobei die zumindest eine geneigte Fläche (8) vom Ende betrachtet eine Form aus der Gruppe aufweist, die aus dreieckig, halbkreisförmig und rechteckig besteht.

16. Siebboden nach einem der vorstehenden Ansprüche, wobei die zumindest eine geneigte Fläche (8) zwei geneigte Flächenabschnitte aufweist, die Ende an Ende ausgerichtet sind und benachbarte Enden aufweisen, die durch einen dazwischenliegenden Strömungsweg für Material getrennt sind, das von diesem Vibrationsschüttelsieb behandelt wird.

17. Siebbodenanordnung nach einem der vorstehenden Ansprüche, die ferner eine Mehrzahl von räumlich getrennten Bändern (6), die zumindest eine Schicht aus Siebmaterial (2) auf der Mehrzahl von räumlich getrennten Bändern (6) umfaßt.

18. Siebboden nach Anspruch 15, wobei die Mehrzahl räumlich getrennter Bänder (6) mit der Unterseite der zumindest einen Schicht aus Siebmaterial (2) verbunden sind.

19. Siebboden nach einem der vorstehenden Ansprüche, wobei der Siebboden im allgemeinen flach ist und die zumindest eine geneigte Fläche (8) aufweist.

20. Siebboden nach Anspruch 19, wobei sich der flache Abschnitt über die gesamte Breite des Siebbodens erstreckt.

21. Siebboden nach einem der vorstehenden Ansprüche, wobei das Sieb mindestens zwei geneigte Flächen aufweist, die einen Entwässerungsbereich bilden.

22. Siebboden nach einem der vorstehenden Ansprüche, wobei sich die geneigte Fläche über etwa 80 % der Breite des Siebbodens erstreckt.

23. Schlammschüttelsieb (110), das einen Siebboden nach einem der vorstehenden Ansprüche aufweist.

24. Verfahren zur Verwendung des Schlammschüttelsiebs (110) nach Anspruch 23, wobei das Verfahren die Schritte des Rütteln des Siebbodens und des Siebens eines mit Partikeln beladenen Fluids durch diesen Siebboden umfaßt.

## Revendications

1. Crible destiné à un tamis vibrant, ledit crible (1) comprenant au moins une couche de matériau de tamisage (2) et au moins une partie inclinée (8), **caractérisé en ce que** ladite partie inclinée est formée de matériau de tamisage.

2. Crible selon la revendication 1 comprenant, de plus, une base sur laquelle ledit matériau de tamisage est disposé.

3. Crible selon la revendication 2, dans lequel la base comprend une plaque perforée (96).

4. Crible selon la revendication 2 ou 3, dans lequel la base comprend une structure dotée de paires d'éléments latéraux opposés, une première paire d'éléments latéraux étant interconnectée entre une seconde paire d'éléments latéraux.

5. Crible selon la revendication 4, comprenant, de plus, au moins une bande (6) interconnectée entre l'une des paires d'éléments latéraux.

6. Crible selon la revendication 5, dans lequel ladite au moins une bande (6) est sous-jacente à au moins une couche de matériau de tamisage (2) et est positionnée en face d'une arête avant de la (des) partie(s) inclinée(s) (8).

7. Crible selon la revendication 5 ou 6, dans lequel ladite (lesdites) bande(s) (6) représente(nt) une pluralité de bandes placées à distance, la ou les partie(s) inclinée(s) (8) représente(nt) une pluralité de parties inclinées placées à distance (8, 10, 12), et pour chaque partie inclinée une bande est positionnée en face de l'arête avant de chaque partie inclinée.

8. Crible selon l'une quelconque des revendications précédentes, dans lequel ladite ou lesdites couche(s) de matériau de tamisage (2) comporte(nt) une pluralité de couches de matériau de tamisage.

9. Crible selon la revendication 8 dans lequel ladite pluralité de couches de matériau de tamisage sont fixées ensemble.

10. Crible selon l'une quelconque des revendications précédentes dans lequel ladite ou lesdites partie(s) inclinée(s) (8) comporte(nt) une pluralité de parties inclinées séparées (8, 10, 12).

11. Crible selon la revendication 10 dans lequel lesdites parties inclinées (8, 10, 12) sont séparées d'une distance comprise entre 7,6 cm environ et 12,7 cm environ (trois à cinq pouces environ).

12. Crible selon l'une quelconque des revendications précédentes, dans lequel la ou les parties inclinées (8) présente(nt) une largeur comprise entre 7,6 cm environ et 12,7 cm environ (trois à cinq pouces environ) et une hauteur comprise entre 0,64 cm environ et 3,81 cm environ (un quart de pouce à environ un pouce et demi).

13. Crible selon l'une quelconque des revendications précédentes, dans lequel la ou les partie(s) inclinée(s) (8) présente(nt) une surface en pente suivant un angle par rapport à l'horizontale compris entre vingt degrés environ et quarante degrés environ.

14. Crible selon l'une quelconque des revendications précédentes dans lequel la ou les partie(s) inclinée(s) (8) comporte(nt) une face arrière inclinée par rapport à l'horizontale suivant un angle de quatre vingt degrés environ à cent vingt cinq degrés environ.

15. Crible selon l'une quelconque des revendications précédentes, dans lequel la ou les partie(s) inclinée(s) (8) présente(nt) une configuration, lorsqu'on l'observe sur une extrémité, prise dans le groupe constitué d'une forme triangulaire, semi-circulaire et rectangulaire.

16. Crible selon l'une quelconque des revendications précédentes, dans lequel la ou les surfaces inclinées (8) comporte(nt) deux parties de pente alignées bout à bout et présentant des extrémités adjacentes séparées par un chemin d'écoulement situé entre elles destiné au matériau à traiter par le tamis vibrant.

17. Ensemble de crible selon l'une quelconque des revendications précédentes comprenant, de plus, une pluralité de bandes séparées (6), la ou les couches de matériau de tamisage (2) sur la pluralité de bandes séparées (6).

18. Crible selon la revendication 15, dans lequel la pluralité de bandes séparées (6) est raccordée à une surface inférieure de la ou des couche(s) de matériau de tamisage (2).

19. Crible selon l'une quelconque des revendications précédentes, dans lequel ledit crible est généralement plat et comprend ladite ou lesdites partie(s) inclinée(s) (8).

20. Crible selon la revendication 19 dans lequel la partie plate s'étend sur toute la largeur du crible.

21. Crible selon l'une quelconque des revendications précédentes dans lequel le crible comprend au moins deux parties inclinées définissant une zone d'égouttage.

22. Crible selon l'une quelconque des revendications précédentes, dans lequel la partie inclinée s'étend à travers 80% environ de la largeur du crible.

23. Tamis vibrant (110) comprenant un crible selon l'une quelconque des revendications précédentes.

24. Procédé pour utiliser le tamis vibrant (110) tel que revendiqué dans la revendication 23, ledit procédé comprenant les étapes consistant à faire vibrer ledit crible et tamiser un fluide chargé de particules à travers ledit crible.
